# FASCICULE DE BREVET EUROPEEN

(11) **EP 0 457 690 B1**
(45) Date de publication et mention de la délivrance du brevet: **14.12.1994**
(21) Numéro de dépôt: 91401286.9
(22) Date de dépôt: 17.05.1991
(51) Int. Cl.: H04B 5/00, H04L 25/28

(54) **Dispositif de liaison sans contact pour relier des tronçons de bus de données de type série**
Kontaktlose Verbindungsvorrichtung zum Verbinden von seriellen Datenbusabschnitten
Contactless connection device for connecting serial data bus sections

(30) Priorité: 18.05.1990 FR 9006273
(43) Date de publication de la demande: 21.11.1991
(73) Titulaire: CENTRE NATIONAL DU MACHINISME AGRICOLE, DU GENIE RURAL, DES EAUX ET DES FORETS (CEMAGREF), F-92160 Antony (FR)
(72) Inventeur: Monod, Marie-Odile, F-91190 Saint Aubin (FR); Lablée, Jean-Luc, F-45380 Chaingy (FR)
(74) Mandataire: Joly, Jean-Jacques

(56) Documents cités:
- EP-A- 0 231 413
- EP-A- 0 285 477
- EP-A- 0 374 018
- WO-A-89/10651
- FR-A- 2 433 200
- PATENT ABSTRACTS OF JAPAN vol. 006, no. 230 (E-142)(1108) 16 novembre 1982,& JP-A-57 132460 (YOKOGAWA) 15 août 1982,

## Description

La présente invention concerne un dispositif de liaison sans contact pour le raccordement de deux tronçons de bus de données de type série, notamment des tronçons de bus de données bifilaire de type différentiel ou non, répondant aux standards EIA.

Le domaine d'application de l'invention est celui de la transmission birectionnelle d'informations entre deux dispositifs, en particulier lorsque ces deux dispositifs sont physiquement isolés l'un de l'autre, ou sont mobiles l'un par rapport à l'autre ou doivent pouvoir être facilement séparés l'un de l'autre.

Ainsi, l'invention trouve des applications pour le transfert d'informations à travers une paroi étanche entre un local confiné en milieu hostile, tel qu'un local d'une installation nucléaire ou chimique, et un local en milieu non hostile, ou pour le transfert d'informations entre deux dispositifs séparés dans un environnement hostile, par exemple entre deux dispositifs immergés, ou encore pour le transfert d'informations à travers une paroi non métallique telle qu'une vitre ou la peau, en conservant l'intégrité de la paroi.

L'invention trouve également des applications dans tous les cas où un dispositif de liaison sans contact peut avantageusement être substitué à une liaison par connecteur et/ou une liaison souple pour assurer la transmission d'informations entre deux appareils distincts ou entre deux pièces mobiles l'une par rapport à l'autre.

Il en est ainsi dans le cas de connecteurs qui sont fréquemment manipulés (par exemple dans des appareillages médicaux) ou qui sont soumis à des conditions d'exploitation sévères (humidité, atmosphère corrosive, boue, poussière, vibrations...), entraînant une rapide détérioration des contacts. Il en est ainsi également dans le cas de liaisons souples entre pièces mobiles, du fait que ces liaisons limitent et peuvent gêner les mouvements relatifs entre les pièces et peuvent facilement être endommagées.

En particulier, l'invention est utilisable en robotique, pour le transfert d'informations entre différents éléments mobiles d'un robot, dans le domaine automobile, pour le transfert d'informations entre différentes parties d'un véhicule ou entre un véhicule tracteur et une remorque, ou dans le domaine du machinisme agricole, pour le transfert d'informations entre un tracteur et un outil ou une machine tractés.

Un dispositif de liaison entre un premier circuit électrique recevant des données binaires et un deuxième circuit comprenant des moyens de traitement de données est décrit dans le document JP-A-57132460. Un même transformateur d'isolement assure la transmission des signaux de données et de l'énergie nécessaire à l'alimentation du deuxième circuit. Un signal modulé par les données à transmettre est appliqué au primaire du transformateur. Le signal prélevé au secondaire du transformateur alimente un circuit redresseur qui fournit la tension d'alimentation du deuxième circuit et est appliqué à un démodulateur qui extrait les données et une horloge pour transmission aux moyens de traitement.

Un tel dispositif ne constitue pas une liaison sans contact, c'est-à-dire avec séparation physique, et non seulement isolement électrique, entre le premier et le deuxième circuit. De plus, ce dispositif de liaison introduit un déphasage tel qu'il est tout à fait inapproprié pour relier deux tronçons de bus de façon "transparente", c'est-à-dire en respectant le protocole logiciel de transmission de données sur le bus.

Le document W0-A-8910651 décrit un principe de transmission sans contact au moyen d'un circuit oscillant sans perte qui, lorsqu'il est mis en présence d'un récepteur comprenant un circuit résonant analogue, transmet de l'énergie au récepteur et peut aussi transmettre à celui-ci des données. Les bobines des circuits émetteur et récepteur peuvent être des circuits imprimés plans.

Aucun mode de réalisation de transmission bidirectionnelle de données n'est décrit. Il n'est pas non plus question dans ce document de transmission entre deux tronçons de bus de données.

Le document EP-A 0 285 477 décrit un dispositif de transmission d'informations entre véhicules accouplés, chaque véhicule étant muni d'un boîtier émetteur-récepteur coopérant sans contact avec un boîtier analogue de l'autre véhicule, chaque boîtier étant raccordé à un bus de type RS 485. Les boîtiers sont disposés de sorte que l'émetteur d'un bottier fait face au récepteur de l'autre boîtier, les émetteurs et récepteurs étant constitués par des pots de ferrite.

Avec une telle disposition, il est nécessaire pour assurer une transmission correcte des informations que l'émetteur d'un boîtier soit aligné avec le récepteur correspondant de l'autre boîtier. Tout mouvement relatif entre les véhicules suivant une direction autre que parallèle aux axes des couples émetteur-récepteur produit un désalignement, au moins pour un des couples.

Par conséquent, le dispositif du document EP-A 0 285 477, non seulement requiert un positionnement relatif très précis entre les deux boîtiers, mais, de plus, ne tolère pas de mouvements relatifs d'amplitude substantielle entre ceux-ci.

La présente invention a pour but de fournir un dispositif de liaison sans contact entre deux tronçons de bus de données qui permette d'assurer une transmission des données, dans un sens et dans l'autre, de façon transparente, quel que soit le protocole de transmission utilisé sur le bus, c'est-à-dire comme si le bus n'était pas interrompu.

L'invention a aussi pour but de fournir un dispositif de liaison qui tolère un désalignement et autorise des mouvements relatifs entre les deux circuits reliés.

Conformément à l'invention, ce but est atteint au moyen d'un dispositif comportant :
- un premier module émetteur-récepteur auquel aboutit le premier tronçon de bus, et un deuxième module émetteur-récepteur auquel aboutit le deuxième tronçon de bus, les modules émetteurs-récepteurs étant disposés face à face et couplés électromagnétiquement,
- chaque module émetteur-récepteur comprenant des moyens pour appliquer à un bobinage émetteur un signal modulé par l'information à transmettre provenant du tronçon de bus auquel le module est raccordé, et des moyens détecteurs recevant un signal modulé d'un bobinage récepteur pour élaborer l'information à transmettre vers le tronçon de bus auquel le module est raccordé, et
- les bobinages émetteur et récepteur étant constitués, dans chaque module émetteur-récepteur, par un seul et même enroulement à plat en spirale, l'axe de l'enroulement du premier module étant sensiblement confondu avec l'axe de l'enroulement du deuxième module lors du fonctionnement du dispositif de liaison.

Les bobinages à plat en spirale peuvent être imprimés sur un support rigide ou souple.

Avantageusement, chaque module émetteur-récepteur comprend des moyens pour empêcher la réinjection, sur le tronçon de bus auquel le module est raccordé, de l'information provenant de ce tronçon de bus et devant être transmise à l'autre module émetteur-récepteur.

Le mode de liaison utilisé n'introduit pas de déphasage susceptible d'affecter le protocole logiciel de transmission des données sur le bus, et ce jusqu'à des débits de données relativement élevés.

En outre, l'utilisation d'un seul et même bobinage émetteur et récepteur présente des avantages significatifs

Ainsi, il est possible de tolérer un désalignement relativement important entre les modules émetteurs-récepteurs.

En outre, les dispositifs ou pièces munis des modules émetteurs-récepteurs peuvent être animés d'un mouvement de rotation autour d'un axe qui coïncide ou est proche de celui des deux enroulements, sans affecter la transmission des informations. Il n'en est pas de même lorsque la transmission d'informations dans un sens et dans l'autre se fait suivant deux trajets parallèles mais distincts, comme dans le dispositif de liaison du document EP-A 0 285 477.

De plus encore, le bobinage émetteur et le bobinage récepteur étant un enroulement plat en spirale, il peut être réalisé sous forme d'un élément de circuit imprimé, permettant une réalisation compacte de chaque module émetteur-récepteur, par exemple sous forme d'une carte. Il est en particulier possible de former l'enroulement sur une carte de circuit imprimé, autour des autres composants du module émetteur-récepteur.

Selon un premier mode de réalisation du dispositif conforme à l'invention, les deux modules émetteurs-récepteurs sont de type "actif", c'est-à-dire sont munis chacun d'une source d'énergie électrique.

Selon un deuxième mode de réalisation, l'un des modules, par exemple le premier, est "actif",tandis que l'autre est "passif", c'est-à-dire ne comprend pas de source propre d'énergie électrique.

Un module émetteur-récepteur actif comprend des moyens de modulation recevant l'information à émettre et comprenant au moins un oscillateur relié à l'enroulement. Divers types classiques de modulation peuvent être utilisés : modulation d'amplitude, modulation de fréquence ou modulation de phase.

Dans un module émetteur-récepteur passif, l'énergie nécessaire au fonctionnement du module est prélevée sur l'énergie émise par l'enroulement du module actif auquel le module passif est couplé, qu'il y ait ou non transmission d'information.

D'autres particularités et avantages du dispositif de liaison selon l'invention ressortiront à la lecture de la description faite ci-après, à titre indicatif mais non limitatif, en référence aux dessins annexés sur lesquels :
- la figure 1 est un schéma électrique d'un mode de réalisation d'un dispositif de liaison conforme à l'invention,
- la figure 2 illustre très schématiquement une réalisation matérielle d'un module émetteur-récepteur du dispositif de la figure 1,
- la figure 3 est un schéma électrique d'un autre mode de réalisation d'un dispositif de liaison conforme à l'invention, et
- les figures 4 et 5 montrent des systèmes de transmission d'informations utilisant des couples de modules émetteurs-récepteurs comprenant chacun un module "actif" et un module "passif".

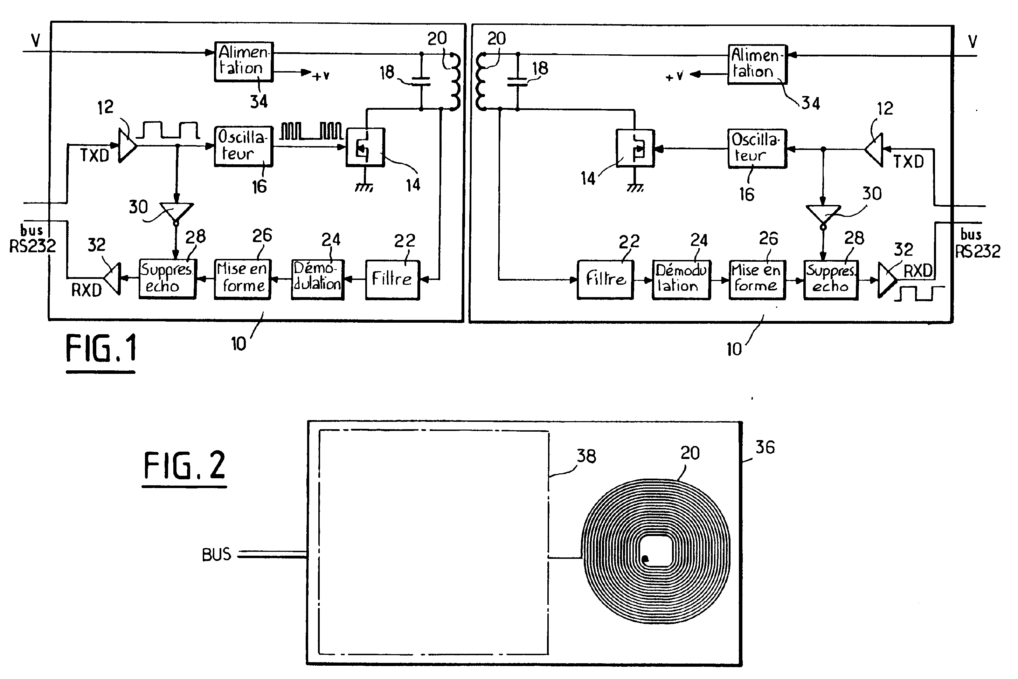

Le dispositif de liaison illustré par la figure 1 est constitué de deux modules émetteurs-récepteurs actifs identiques 10 chacun raccordé à un tronçon respectif d'un bus de données BS. Dans cet exemple, le bus BS est un bus bifilaire de mode série de type RS 232 à fonctionnement en semi-duplex ("half-duplex"). Les modules 10 sont destinés à réaliser une liaison sans contact entre les deux tronçons de bus BS pour assurer, de façon transparente, la transmission d'informations sur le bus BS de la même façon que si celui-ci était continu.

Dans sa partie émettrice, chaque module 10 comprend une entrée d'émission TXD reliée à un circuit d'adaptation 12 ("driver" de bus). Les informations numériques sous forme binaire reçues du tronçon de bus connecté au module 10, en sortie du circuit 12, sont appliquées sur une entrée de commande d'un oscillateur haute fréquence 16. Dans l'exemple ici considéré, le signal de sortie de l'oscillateur, qui se présente sous forme d'impulsions à haute fréquence, est modulé en amplitude par les informations à transmettre. Le signal modulé est appliqué à un interrupteur statique 14 tel qu'un transistor à effet de champ branché en série avec un enroulement 20 entre la masse et une borne portée à un potentiel d'alimentation de l'enroulement. Un condensateur 18 est branché en parallèle sur l'enroulement 20 formant avec celui-ci un circuit LC.

Dans chaque module 10, un seul et même enroulement 20 est utilisé en tant qu'enroulement émetteur et récepteur couplé électromagnétiquement à l'enroulement 20 de l'autre module.

Dans sa partie réceptrice, chaque module comprend un circuit de filtrage 22 reçevant, éventuellement après écrêtage, le signal modulé transmis à l'enroulement 20 depuis l'autre module. Le signal de sortie du circuit de filtrage 22 est démodulé au moyen d'un circuit de démodulation 24, puis mis en forme au moyen d'un circuit 26, tel qu'une bascule de Schmidt. Les impulsions produites par le circuit de mise en forme 26, qui correspondent aux informations numériques reçues de l'autre module, sont appliquées à la sortie de réception RXD à travers un circuit à portes 28 de suppression d'écho et un circuit d'adaptation de bus 32. Le circuit 28 de suppression d'écho est un circuit à portes logiques, commandé par la sortie du circuit 12 par l'intermédiaire d'un inverseur 30.

L'entrée d'émission TXD et la sortie de réception RXD sont reliées au tronçon de bus auquel le module est connecté. Un circuit d'alimentation 34 fournit la tension +v nécessaire à l'alimentation des composants du module et la tension nécessaire à l'enroulement 20, à partir d'une tension V fournie par une source d'énergie extérieure, par exemple une batterie d'accumulateurs.

Le fonctionnement du dispositif de liaison décrit ci-avant découle à l'évidence de ce qui précède. Chaque module émetteur-récepteur fonctionne, alternativement, soit en émetteur, soit en récepteur. Lors du fonctionnement en émetteur, le circuit de suppression d'écho 28 est commandé par les données à émettre afin de bloquer la voie réception pour éviter la réinjection de ces données sur le tronçon de bus d'où elles proviennent.

Dans l'exemple considéré, comme montré sur la figure 2, l'enroulement émetteur-récepteur 20 est constitué par une self à air réalisée sous forme d'un enroulement à plat en spirale ou "colimaçon". Avantageusement, l'enroulement 20 est imprimé sur un circuit 36 en forme de carte rigide, ou souple. Dans l'exemple illustré, celle-ci porte en outre, dans une zone 38, les autres composants constitutifs du module auxquels l'enroulement 20 est relié. L'utilisation d'un circuit imprimé permet une réalisation très compacte du module émetteur-récepteur.

Il est toutefois possible de former l'enroulement 20 sur un support séparé de la carte portant les autres composants du module et relié à celle-ci par un conducteur blindé. Il en sera ainsi notamment lorsque l'emplacement de l'enroulement est dans un environnement hostile pour les autres composants.

De préférence, l'enroulement 20 est imprimé en double face, afin d'augmenter le champ, les colimaçons formés sur les deux faces de la carte étant connectés en série. Un plus grand nombre de colimaçons pourra être utilisé dans le cas d'un circuit multi-couches avec impression d'un colimaçon par couche.

L'enroulement 20 pourra être formé sur d'autres supports, comme par exemple un support céramique ou un support isolant souple. Dans ce cas, l'enroulement est formé par exemple en utilisant un procédé de dépôt.

Le couplage entre deux modules émetteurs-récepteurs est réalisé en disposant les enroulements 20 de ceux-ci en regard, c'est-à-dire dans des plans parallèles et avec leurs axes sensiblement alignés.

Des essais ont été effectués avec un dispositif de liaison tel qu'illustré par les figures 1 et 2, l'oscillateur 16 fournissant un signal de fréquence égale à environ 1 MHz et les enroulements 20 étant constitués de 20 spires, avec un diamètre extérieur sensiblement égal à 50 mm.

Le dispositif de liaison a permis d'atteindre sans difficultés un débit d'informations d'au moins 300 kbits/s sur un bus de type RS 232. Dans le cas envisagé plus loin d'un bus de type RS 485, un débit de 150 kbits/s a été facilement atteint. Dans ce cas, le respect du protocole logiciel de transmission de données utilisé (protocole CAN) a été parfaitement assuré. Il a été vérifié que le dispositif de liaison est utilisable avec des protocoles logiciels de transmission de données mettant en oeuvre des moyens de détection de collision de données sur le bus.

La distance séparant les enroulements 20 des deux modules a été augmentée jusqu'à environ 2 cm sans que la transmission d'informations soit en aucune manière affectée.

En outre, il a été observé que le dispositif tolère un désalignement relativement important (jusqu'à 10 mm) entre les axes des deux enroulements sans incidence sur la qualité de la transmission. Un désalignement plus important pourraît éventuellement être supporté en augmentant les dimensions des enroulements ou de l'un d'entre eux. L'un au moins des enroulements peut alors être formé sur la carte de circuit imprimé non pas à côté de l'emplacement des autres composants montés sur la carte, mais autour de l'ensemble de ceux-ci.

Outre la transparence au protocole logiciel utilisé sur le bus, le dispositif de liaison selon l'invention permet l'utilisation de modules émetteurs-récepteurs pouvant être mobiles l'un par rapport à l'autre longitudinalement, transversalement et en rotation par rapport à l'axe des bobinages, et pouvant être physiquement séparés.

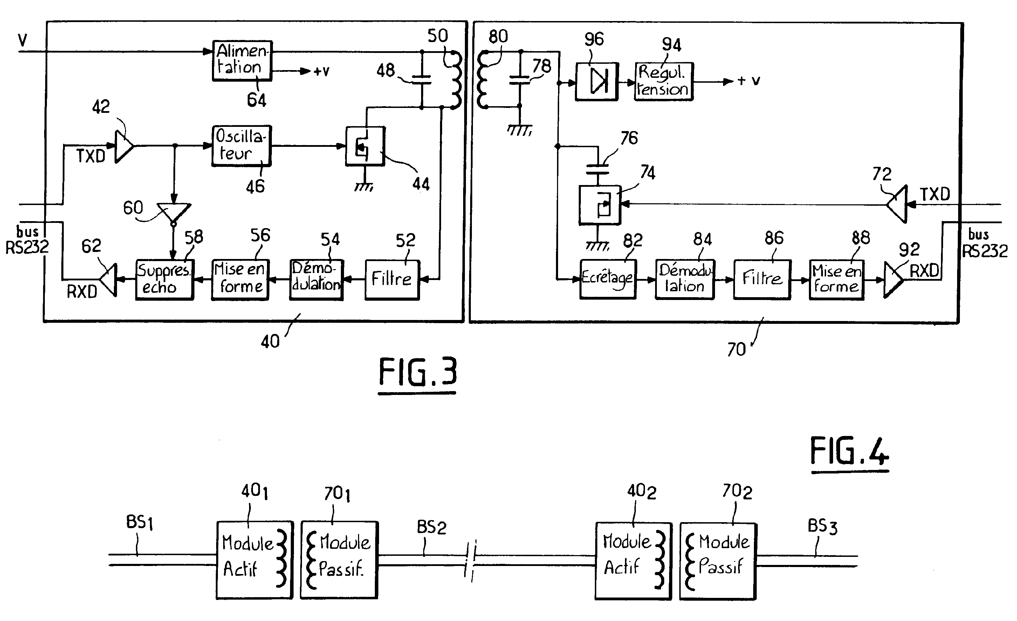

La figure 3 illustre un autre mode de réalisation d'un dispositif de liaison selon l'invention utilisant non pas deux modules actifs (c'est-à-dire ayant leur propre circuit d'alimentation électrique), mais un module actif 40 et un module passif 70 dépourvu de source d'énergie propre.

Le module actif 40 est similaire à ceux illustrés par la figure 1. Il comprend un oscillateur 46 dont une entrée de commande reçoit les informations numériques à transmettre venant d'un circuit 42 d'adaptation de bus. Le signal de sortie de l'oscillateur, modulé par les informations à transmettre, commande un interrupteur 44 branché en série avec un enroulement 50 entre la masse et une source d'alimentation de l'enroulement. L'enroulement 50 est un enroulement en colimaçon analogue à l'enroulement 20 décrit plus haut. Un condensateur 48 est branché en parallèle sur l'enroulement 50.

Les signaux reçus par l'enroulement 50 sont filtrés au moyen d'un filtre 52, démodulés au moyen d'un circuit de démodulation 54 et mis en forme par un circuit de mise en forme 56. Les informations numériques obtenues sont transmises au tronçon de bus auquel le module 40 est connecté par l'intermédiaire d'un circuit 58 de suppression d'écho et d'un circuit 62 d'adaptation de bus. Le circuit 58 de suppression d'écho est commandé par les informations numériques émises, par l'intermédiaire d'un inverseur 60. Un circuit d'alimentation 64 fournit la tension +v d'alimentation des composants du module 40 et la tension d'alimentation de l'enroulement 50. Les circuits 42 et 62 sont reliés au tronçon de bus auquel le module 40 est connecté.

Le module passif 70 comprend un enroulement 80 en colimaçon, semblable à l'enroulement 50 et couplé à celui-ci. Un condensateur 78 est branché en parallèle avec l'enroulement 80.

Le signal aux bornes de l'enroulement 80 est redressé au moyen d'un redresseur simple alternance 96 dont la sortie est appliquée à un régulateur de tension 94 qui fournit la tension d'alimentation +v pour les composants du module passif 70. Ainsi, l'énergie nécessaire au fonctionnement du module passif provient de l'oscillateur 46 du circuit actif, par l'intermédiaire des enroulements 50 et 80, qu'il y ait ou non transmission d'informations. Afin d'assurer un transfert d'énergie optimum, l'oscillateur 46 fournit un signal dont la fréquence est égale à la fréquence de résonance du circuit LC formé par l'enroulement 80 et le condensateur 78. On utilisera alors un oscillateur stable en fréquence. Une grande stabilité n'est par contre pas exigée dans le cas d'un oscillateur de module actif couplé à un autre module actif.

Les signaux numériques correspondant aux informations à transmettre, venant d'un circuit d'adaptation de bus 72, commandent un interrupteur 74 constitué par un transistor VMOS. Celui-ci est branché en série avec un condensateur 76 pour former un circuit en parallèle sur le condensateur 78. La fermeture de l'interrupteur 74 commande par conséquent la mise en parallèle du condensateur 76 sur le condensateur 78 et le désaccord du circuit résonnant formé par celui-ci et l'enroulement 80. Il en résulte un affaiblissement du signal détecté par l'enroulement 50 du module actif 40, ce qui permet la restitution des informations numériques venant du module passif 70.

En réception, le module passif 70 comprend un circuit d'écrêtage 82 connecté à l'enroulement 80. Les signaux reçus par l'enroulement 80 et écrêtés sont démodulés au moyen d'un circuit de démodulation 84, filtrés au moyen d'un circuit de filtrage 86 et mis en forme par un circuit de mise en forme 88. Les circuits 72 et 92 sont reliés au tronçon de bus auquel le circuit passif 70 est connecté.

Afin de minimiser la consommation d'énergie par le module passif, les composants actifs de celui-ci sont de préférence choisis en technologie CMOS.

La transmission d'informations entre un module actif et un module passif est réalisée de la même façon qu'entre deux modules actifs, la distance maximale séparant les enroulements devant toutefois être plus limitée.

Plusieurs dispositifs de liaison conformes à l'invention, formés par des couples module actif/module actif ou module actif/module passif peuvent bien entendu être utilisés pour former un bus à partir de plus de deux tronçons.

Ainsi, la figure 4 montre un couple constitué par un module actif 40₁ et un module passif 70₁ reliant un premier tronçon de bus BS₁ et un deuxième tronçon de bus BS₂, et un deuxième couple constitué également par un module actif 40₂ et un module passif 70₂ reliant le deuxième tronçon de bus BS₂ et un troisième tronçon de bus BS₃.

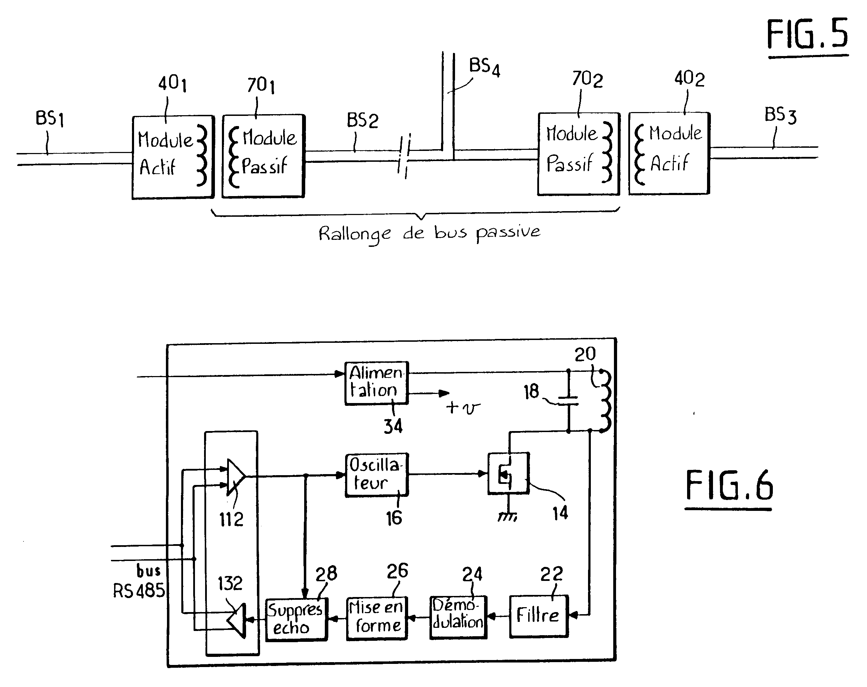

Quant à la figure 5, elle montre un couple constitué par un module actif 40₁ et un module passif 70₁ reliant un premier tronçon de bus BS₁ et un deuxième tronçon de bus BS₂, et un deuxième couple constitué inversement d'un module passif 70₂ et d'un module actif 40₂ reliant le deuxième tronçon de bus BS₂ à un troisième tronçon de bus BS₃.

L'ensemble constitué par le module passif 70₁, le tronçon de bus BS₂ et le module passif 70₂ connectés en série constitue une "rallonge" de bus passive.

Un ou plusieurs tronçons de bus tels que BS₄ peuvent être branchés en dérivation sur le tronçon de bus BS₂ pour être connectés à d'autres tronçons de bus par des dispositifs de liaison conformes à l'invention.

En référence aux figures 1 à 3, on a envisagé le cas de dispositifs de liaison pour bus de type RS 232.

Bien entendu, l'invention est applicable à d'autres bus, de type différentiel ou non, répondant aux standards EIA. Ainsi, la figure 6 montre un module actif 100 d'un dispositif de liaison conforme à l'invention destiné à un bus bifilaire série de type RS 485. A l'exception des circuits d'adaptation de bus 112 et 132, qui sont spécifiques au bus RS 485, les circuits constituant les trajets émission et réception du module 100 sont identiques à ceux constituant les mêmes trajets dans le module 10 ; ils ne seront pas décrits à nouveau (sur la figure 6, ces circuits portent les mêmes références que sur la figure 2).

A la différence du module actif 10 de la figure 1, on note sur la figure 6 que le circuit de suppression d'écho 28 est commandé directement par les signaux numériques correspondant aux informations à transmettre, ceci pour tenir compte de la polarité de ces signaux dans le cas du standard RS 485.

Dans les circuits décrits ci-avant, la transmission entre les modules est réalisée par modulation d'amplitude par les informations à transmettre. D'autres types connus de modulation pourront être mis en oeuvre, en particulier des modulations de fréquence, ou de phase.

Lorsque le type de modulation choisi est la modulation de fréquence, il pourra être prévu de munir chaque circuit actif d'une pluralité de circuits oscillateurs.

## Revendications

1. Dispositif de liaison sans contact pour relier un premier et un deuxième tronçon de bus de données de type série afin de permettre la transmission birectionnelle d'informations sur le bus formé par les deux tronçons de façon transparente, quel que soit le protocole logiciel utilisé, le dispositif comportant :
- un premier module émetteur-récepteur (10 ; 40) auquel aboutit le premier tronçon de bus, et un deuxième module émetteur-récepteur (10 ; 70) et auquel aboutit le deuxième tronçon de bus, les modules émetteurs-récepteurs (10) étant disposés face à face sans contact et couplés électromagnétiquement,
- chaque module émetteur-récepteur comprenant des moyens pour appliquer à un bobinage émetteur (20 ; 50, 80) un signal modulé par l'information à transmettre provenant du tronçon de bus auquel le module est raccordé, et des moyens détecteurs recevant un signal modulé d'un bobinage récepteur (20 ; 50 ,80) pour élaborer l'information à transmettre sur le tronçon de bus auquel le module est raccordé,
caractérisé en ce que, dans chaque module émetteur-récepteur (10; 40, 70), les bobinages émetteur et récepteur sont constitués par un seul et même enroulement à plat en spirale (20 ; 50, 80), les axes des enroulements du premier et du deuxième module étant sensiblement alignés lorsque le dispositif de liaison est en fonctionnement.

2. Dispositif de liaison selon la revendication 1, caractérisé en ce qu'il est constitué de deux modules émetteurs-récepteurs actifs identiques (10), chacun muni d'un circuit d'alimentation propre (34) relié à une source d'énergie et de moyens de modulation recevant les informations à transmettre et comprenant au moins un circuit oscillateur (16).

3. Dispositif de liaison selon la revendication 1, caractérisé en ce qu'il est constitué d'un module émetteur-récepteur actif (40) muni d'un circuit d'alimentation propre (64) relié à une source d'énergie et de moyens de modulation recevant les informations à transmettre et comprenant au moins un oscillateur (46), et d'un module émetteur-récepteur passif (70) comprenant des moyens (96, 94) pour fournir une tension d'alimentation par prélèvement d'énergie sur celle fournie par le module actif (40).

4. Dispositif de liaison selon l'une quelconque des revendications 2 et 3, caractérisé en ce que chaque module émetteur-récepteur actif comprend des moyens (28, 30 ; 58, 60) pour empêcher la réinjection, sur le tronçon de bus auquel le module est raccordé, de l'information provenant de ce tronçon de bus et devant être transmise à l'autre module émetteur-récepteur.

5. Dispositif de liaison selon l'une quelconque des revendications 1 à 4, caractérisé en ce que les enroulements (20; 50, 80) sont constitués par des éléments de circuit imprimé.

6. Dispositif de liaison selon la revendication 5, caractérisé en ce que, dans chaque module émetteur-récepteur, l'enroulement (20; 50, 80) et les constituants du module émetteur-récepteur sont sur une même carte de circuit imprimé.

7. Dispositif de liaison selon la revendication 5, caractérisé en ce que chaque enroulement est formé de plusieurs impressions superposées connectées en série.

8. Dispositif de liaison selon l'une quelconque des revendications 5 et 7, caractérisé en ce que les enroulements sont formés sur un support souple.

9. Dispositif de liaison selon la revendication 6, caractérisé en ce que chaque module est sous forme d'une carte de circuit imprimé (36) et l'enroulement (20) est constitué par un élément de circuit imprimé formé autour de l'ensemble des autres composants du module montés sur la carte.

## Claims

1. A contactless linking device for interconnecting first and second sections of a serial data bus in order to provide a transparent bi-directional data transmission along the bus comprised of the said two sections, irrespective of the software protocol used, said device comprising:
- a first transmitter-receiver module (10; 40) at which terminates said first bus section, and a second transmitter-receiver module (10; 70) at which terminates said second bus section, the transmitter-receiver modules (10), being disposed face-to-face without contact and being electromagnetically coupled,
- each transmitter-receiver module comprising means for supplying a transmitting coil (20; 50, 80) with a signal modulated by the data to be transmitted and coming from the bus section to which said module is connected, and detection means receiving a modulated signal from a receiving coil (20; 50, 80) to produce the data to be transmitted to the bus section to which the module is connected,
characterized in that, in each transmitter-receiver module (10; 40, 70), the transmitting and receiving coils are comprised of one and the same flat spiral winding (20; 50, 80), the axes of the windings of the first and of the second module being substantially aligned when the linking device is in operation.

2. Linking device according to claim 1, characterized in that it is formed of two identical active transmitter-receiver modules (10), each one being provided with an individual power supply circuit (34) connected to an energy source, and with modulation means for receiving the information to be transmitted and comprising at least one oscillator circuit (16).

3. Linking device according to claim 1, characterized in that it is comprised of one active transmitter-receiver module (40) provided with an individual power supply circuit (64) connected to an energy source and modulation means for receiving the information to be transmitted and comprising at least one oscillator (46), and a passive transmitter-receiver module (70) comprising means (96, 94) for delivering a power supply voltage by drawing energy from the one received from said active module (40).

4. Linking device according to any one of claims 2 and 3, characterized in that each active transmitter-receiver module comprises means (28, 30; 58, 60) preventing the re-injection, into the bus portion to which said module is attached, of the data coming from that bus portion and intended to be sent to the other transmitter-receiver module.

5. Linking device according to any one of claims 1 to 4, characterized in that said windings (20; 50, 80) are comprised of printed circuit elements.

6. Linking device according to claim 5 characterized in that, in each transmitter-receiver module, the winding (20; 50, 80) and the components of said transmitter-receiver module are fitted on the same printed circuit board.

7. Linking device according to claim 5, characterized in that each winding is made from a plurality of printed layers connected in series.

8. Linking device according to any one of claims 5 and 7, characterized in that said windings are formed on a flexible support.

9. Linking device according to claim 6, characterized in that each module is in the form of a printed circuit board (36) and the winding (20) is comprised of a printed circuit element formed around all the other module components fitted on said board.

## Patentansprüche

1. Kontaktlose Verbindungsvorrichtung zur Verbindung eines ersten und eines zweiten seriellen Datenbusabschnittes, um die bidirektive Übertragung von Informationen auf dem durch die beiden Abschnitte gebildeten Bus in transparenter Weise unabhängig von dem verwendeten Logikprotokoll zur ermöglichen, bestehend aus:
- einem ersten Sende-Empfangs-Modul (10; 14), an das der erste Busabschnitt angrenzt, und einem zweiten Sende-Empfangs-Modul (10; 70), an das der zweite Busabschnitt angrenzt, wobei die Sende-Empfangs-Moduln (10) kontaktlos und elektromagnetisch gekoppelt und einander zugewandt angeordnet sind,
- wobei jedes Sende-Empfangs-Modul Einrichtungen aufweist, um eine Sendespule (20; 50, 80) mit einem Signal zu beaufschlagen, das durch die zu übertragende Information moduliert ist, die von dem Busabschnitt stammt, an den das Modul angeschlossen ist, sowie Detektoreinrichtungen, die ein moduliertes Signal einer Empfangsspule (20; 50, 80) empfangen, um die auf dem Busabschnitt, an den das Modul angeschlossen ist, zu übertragende Information zu erzeugen,
**dadurch gekennzeichnet**, daß
in jedem Sende-Empfangs-Modul (10; 40, 70) die Sende- und Empfangsspulen aus nur einer einzigen, spiralförmigen Flachwicklung (20; 50, 80) besteht, wobei die Achsen der Wicklungen des ersten und des zweiten Moduls im wesentlichen fluchten, wenn die Verbindungsvorrichtung in Betrieb ist.

2. Verbindungsvorrichtung nach Anspruch 1,
**dadurch gekennzeichnet**, daß
sie aus zwei aktiven, identischen Sende-Empfangs-Modulen (10) besteht, von denen jedes mit einem eigenen Speisekreis (34) versehen ist, der an eine Energiequelle angeschlossen ist, sowie aus Modulationseinrichtungen, die die zu übertragenden Informationen empfangen und wenigstens einen Oszillatorkreis (16) aufweisen.

3. Verbindungsvorrichtung nach Anspruch 1,
**dadurch gekennzeichnet**, daß
sie aus einem aktiven Sende-Empfangs-Modul (40) besteht, der mit einem eigenen Speisekreis (64) versehen ist, der an eine Energiequelle angeschlossen ist, sowie Modulationseinrichtungen, die die zu übertragenden Informationen empfangen und wenigstens einen Oszillatorkreis (46) aufweisen, sowie einem passiven Sende-Empfangsmodul (70), der Einrichtungen (96, 94) aufweist, um eine Versorgungsspannung durch Entnahme von Energie von derjenigen liefern, die von dem aktiven Modul (40) geliefert wird.

4. Verbindungsvorrichtung nach Anspruch 2 oder 3,
**dadurch gekennzeichnet**, daß
jedes aktive Sende-Empfangs-Modul Einrichtungen (28, 30; 58, 60) aufweist, um die Rückkopplung auf den Busabschnitt, an den das Modul angeschlossen ist, der Information zu verhindern, die von diesem Busabschnitt stammt und die zum anderen Sende-Empfangs-Modul übertragen werden soll.

5. Verbindungsvorrichtung nach einem der Ansprüche 1 - 4,
**dadurch gekennzeichnet**, daß
die Wicklungen (20; 15, 80) aus gedruckten Schaltkreiselementen gebildet sind.

6. Verbindungsvorrichtung nach Anspruch 5,
**dadurch gekennzeichnet**, daß
in jedem Sende-Empfangs-Modul die Wicklung (20; 15, 80) und die Bauteile des Sende-Empfangs-Moduls sich auf derselben gedruckten Schaltkreisplatte befinden.

7. Verbindungsvorrichtung nach Anspruch 5,
**dadurch gekennzeichnet**, daß
jede Wicklung aus mehreren übereinander angeordneten, in Reihe geschalteten Aufdrucken besteht.

8. Verbindungsvorrichtung nach Anspruch 5 oder 7,
**dadurch gekennzeichnet**, daß
die Wicklungen auf einer flexiblen Unterlage gebildet sind.

9. Verbindungsvorrichtung nach Anspruch 6,
**dadurch gekennzeichnet**, daß
daß jedes Modul aus einer gedruckten Schaltkreisplatte (36) besteht, und daß die Wicklung (20) aus einem gedruckten Schaltkreiselement besteht, das um die Anordnung der anderen Bauelemente des Moduls, die auf der Platte montiert sind, gebildet ist.
